# EUROPEAN PATENT SPECIFICATION

(11) **EP 0 440 816 B1**
(45) Date of publication and mention of the grant of the patent: **10.06.1998**
(21) Application number: 90912489.3
(22) Date of filing: 27.08.1990
(51) Int. Cl.: G05B 19/425

(54) **ROBOT CONTROL METHOD**
ROBOTERSTEUERUNGSVERFAHREN
PROCEDE DE COMMANDE DE ROBOT

(30) Priority: 29.08.1989 JP 223986/89
(43) Date of publication of application: 14.08.1991
(73) Proprietor: KABUSHIKI KAISHA YASKAWA DENKI SEISAKUSHO, Kitakyushu-Shi Fukuoka-Ken (JP)
(72) Inventor: MINAMI, Yoshikatsu Yahata Plant K.K.Yaskawa DenkiY, Kitakyushu-shi Fukuoka 806 806 (JP); TANAKA, Masato Yahata Plant K.K.Yaskawa Denki, nishiKitakyushu-shi Fukuoka 806 (JP)
(74) Representative: Müller-Boré & Partner Patentanwälte
(86) International application number: PCT/JP90/01082
(87) International publication number: WO 91/03779

(56) References cited:
- EP-A- 0 172 486
- EP-A- 0 381 185
- JP-A- 1 173 207
- JP-A-61 229 107
- JP-A-63 216 689
- PATENT ABSTRACTS OF JAPAN vol. 11, no. 233 (P-600) 30 July 1987 & JP-A-62 044 809 (HITACHI) 26 February 1987

## Description

The present invention relates to a teaching method in case that a position of a tool such as a welding torch is fixed, a workpiece is held by a robot wrist, and a position and an orientation of the workpiece are controlled.

It is known that when an industrial robot is used in an automatic welding apparatus or the like, it can be better for an efficient operation to fix a tool such as a welding torch and move the workpiece to be welded rather than fix a workpiece to be welded and move a tool such as a welding torch by a robot. For example, if a workpiece laid at a certain position is held by a robot wrist and is moved to a neighbourhood of a tool with the workpiece being held by the robot wrist; a position and an orientation of the tool are controlled so as to move along a welding line; and after welding, the work is brought to another position, then more than one robot is no longer necessary. On the contrary, in case a welding torch is moved by a robot, an additional robot is necessary to carry in and out a workpiece.

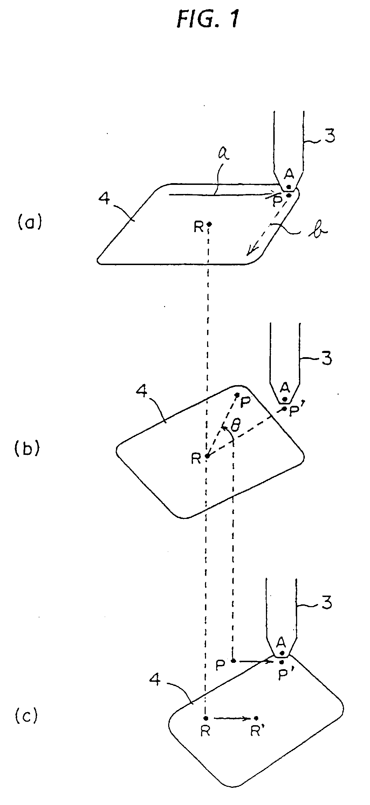

In such a case, i.e. when a robot conducts operations holding a workpiece, a welding operation is explained hereinafter referring to Fig. 1. Fig. 1 (a) shows a welding operation that welding along line "a" of workpiece 4 has been finished by tool 3 at P point on workpiece 4 and welding along line "b" is going to start from P point. This welding operation is carried out in the condition that an attitude of workpiece 4 is changed as shown in Fig. 1 (c) in order to be equal to the welding condition as line "a".

When a teaching operation of such welding operation by a six-axis articulated robot is carried out, one of following method has been conventionally used.
(1) Each axis of a robot is controlled independently from the others, whereby a desired workpiece orientation is determined.
(2) A desired workpiece orientation is determined by rotation around a reference coordinate axis on the main body of a robot and displacement parallel to the reference coordinate axis. (Fig. 1 (b) and 1 (c)).
(3) A desired workpiece orientation is determined by rotation around the tool coordinate axis on the main body of a robot and displacement parallel to the tool coordinate axis. (Fig. 1 (b) and 1 (c)).

The rotations described in (2) and (3) achieves motion control by rotating around a control point P of a robot. The control point P is a point on the axis line of a top wrist of the robot 1 and is a reference point when workpiece 4 is rotated.

In the case of method (2), the reference coordinate axes are defined by the reference coordinate axes (X_{R}, Y_{R} and Z_{R}) which, in turn, define the coordinate system of a robot. In the case of method (3), the tool coordinate axes refer to coordinates of a tool attached to the wrist flange of the robot.

However, according to the above-described methods, the workpiece 4 clamped by the robot assumes the desired orientation with respect to an arbitrary working point A by a method involving the control of each axis of the robot independently and the rotation of the workpiece around a coordinate axis with the control point R of the robot as the center of rotation with this method. The orientation of the workpiece 4 alone cannot be changed without changing the position of the point P on the workpiece 4, meaning that the rotation and the parallel displacement must be repeatedly carried out, as shown in Fig. 1, resulting in a longer teaching operation time.

According to JP-A-62 044 809 there is known a method for controlling a robot clamping a tool at a fixed offset position of a wrist, wherein the position of the wrist can be changed by operating a teaching box of the robot. Consequently a position of a point of the tool is changed in accordance with the movement of the robot. Since the relative position between the point of the tool and the wrist of the robot is fixed, a constant offset information can be calculated by comparision of the point of the tool with a reference point of the wrist. According to this known method the positional data of the robot are corrected on the basis of the constant offset information and stored.

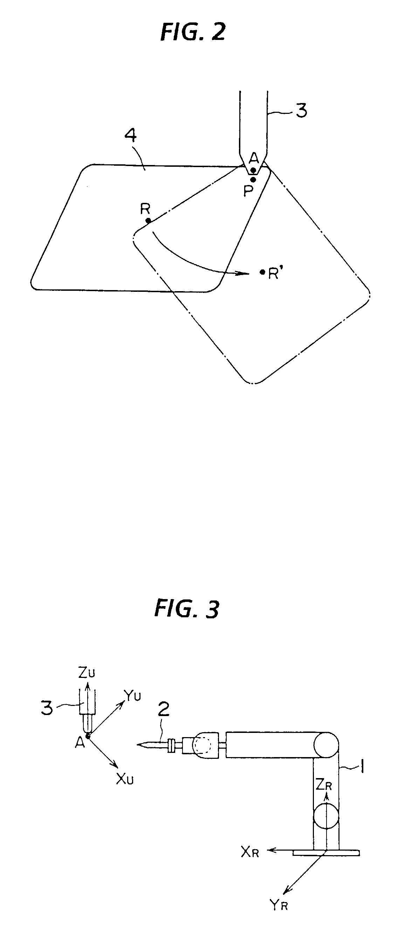

In view of the above, the primary object of the present invention is to attain the relative orientation between the workpiece (4) clamped by the robot and an arbitrary working point (A) of a tool for teaching operation without displacing the position of the point (P) on the workpiece, in particular as shown in Fig. 2.

This object is solved according to the invention by a robot motion control method according to claim 1. Preferred embodiments of the invention are subject of the dependent claims.

According to the present invention, the orientation of the workpiece clamped by the robot with respect to an arbitrary working point can be quickly changed to a desired orientation, thereby greatly shortening the teaching operation time.

Preferably, the robot control method in accordance with a preferred embodiment of the present invention is characterized by defining, through a reference coordinate system of a robot, an arbitrary working point A, and subsequently accomplishing the teaching operation of the workpiece 4 clamped or otherwise held by the robot with respect to the said arbitrary working point, by controlling said arbitrary point A as viewed temporarily an end effector from a robot control point, and rotating the workpiece 4 about the working point, whereby the orientation of the workpiece relative to the working point A can be arbitrarily changed.
Fig. 1 is a view used to explain some conventional teaching operations;
Fig. 2 is a view used to explain a teaching operation in accordance with the present invention;
Fig. 3 and 4 are views used to explain the definition of an arbitrary working point;
Fig. 5 is a vector diagram illustrating the relationship between a robot control point and an arbitrary working point;
Fig. 6 is a view illustrating the outside appearance of a six-axis articulated robot;
Fig. 7 is a view illustrating the projection over the Xo-Yo plane of the fixed coordinate system of a robot;
Fig. 8 is a view illustrating the projection over the Mo-Zo plane of a robot;
Fig. 9 is a block view illustrating the construction of a robot controller adapted for carrying out a robot control method in accordance with the present invention; and
Fig. 10 shows a flowchart for carrying out the robot control method in accordance with the present invention.

A preferred embodiment of the present invention will be described in detail hereinafter.

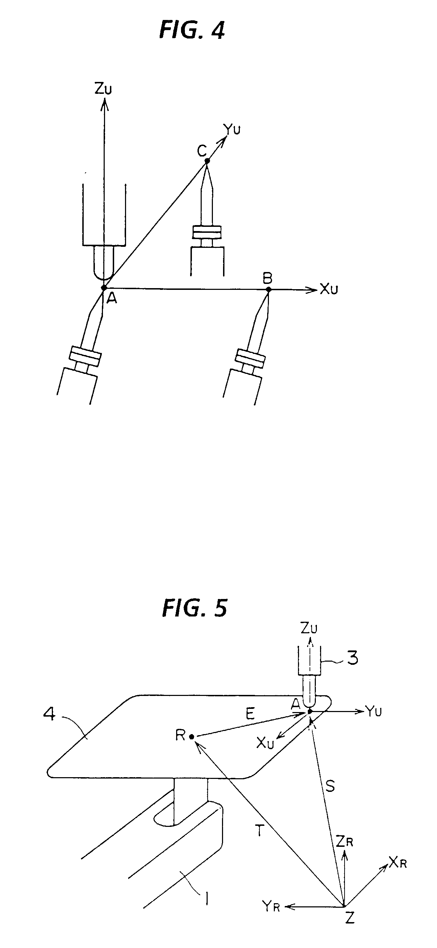

First, as is best shown in Fig. 3, a tool 2 whose dimension is measured with a high degree of accuracy is attached to the wrist flange of a robot 1, thereby distinctly indicating the coordinates of an arbitrary working point A with a teaching operation tool 3. Next, as shown in Fig. 4, the tool 2 is displaced to a point B and a point C. In this case, the relationships between the pints A-C are as follows:
- Point A: a working point (the origin of the coordinate system);
- Point B: the direction of the Xu axis; and
- Point C: the direction of the Yu axis.

Furthermore, the exterior products AB and AC are in the direction of the Zu axis.

As shown in Fig. 5, the coordinate system at an arbitrary working point A, viewed from the coordinates of the points A, B and C on the reference coordinate system Z of the robot, is defined as S (4 × 4 matrix).$\text{S = Z · S}$ where, 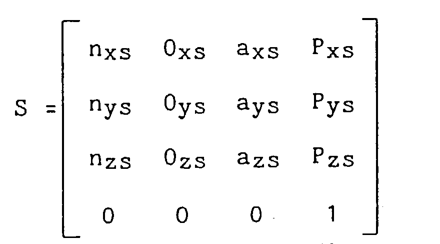 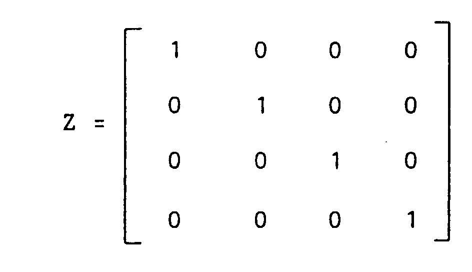 Furthermore,${\text{A = (P}}_{\text{xs}} {\text{P}}_{\text{ys}} {\text{P}}_{\text{zs}} \text{)}$$\vec{{\text{X}}_{\text{u}}} {\text{= (n}}_{\text{xs}} {\text{N}}_{\text{ys}} {\text{N}}_{\text{zs}} \text{)}$$\vec{{\text{Y}}_{\text{u}}} {\text{= (0}}_{\text{xs}} {\text{0}}_{\text{ys}} {\text{0}}_{\text{zs}} \text{)}$$\vec{{\text{Z}}_{\text{u}}} {\text{= (a}}_{\text{xs}} {\text{a}}_{\text{ys}} {\text{a}}_{\text{zs}} \text{)}$ and $\vec{{\text{X}}_{\text{u}}}$, $\vec{{\text{Y}}_{\text{u}}}$ and $\vec{{\text{Z}}_{\text{u}}}$ represent a unit vector.

Next, in the case of the teaching operation, an arbitrary working point A is calculated as end effector, viewed from the control point R on the workpiece 4 clamped by the robot 1 (Fig. 5).$\text{S = Z · T · E}$${\text{E = T}}^{\text{-1}} \text{· S}$

Where
T is a matrix representing the control point R of the robot; and
E is a matrix representing an end effector from the control point R of the robot to the working point A.

For example, the rotation around Zu axis defined by the working point A will be explained. When the angle of the rotation is represented by 0, the rotation matrix M is given by

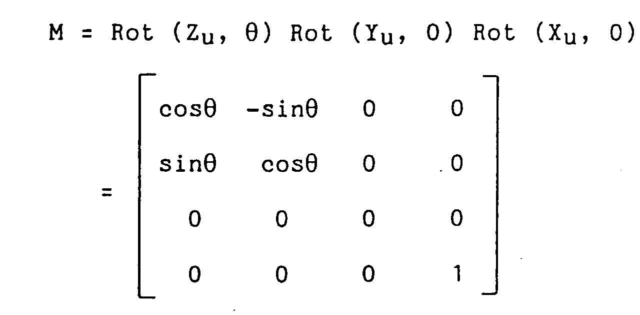

Since the apparent coordinate system S of an arbitrary working point A is represented by$\text{S' = S · M}$ the robot orientation is obtained by calculating six-axis link angles from T' obtained from$\text{T' · E = S'}$ and${\text{T' = S'E}}^{\text{-1}}$

In this case, for example, the arithmetic operation disclosed in Laid-Open Japanese Patent Application No. 62-198786 may be also used.

This operation or calculation will be described below.

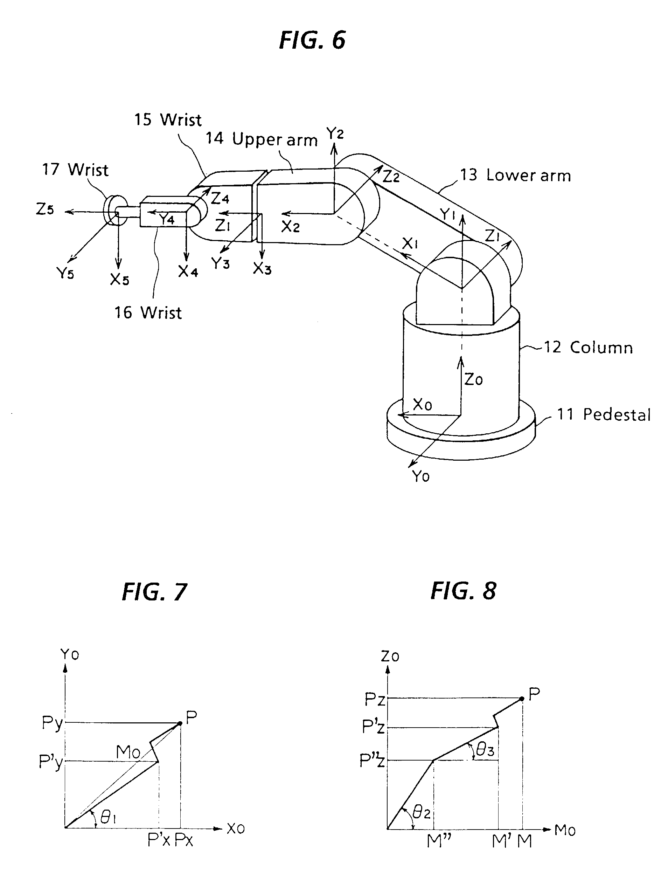

Fig. 6 illustrates the outside appearance of the six-axis articulated robot to be controlled; Fig. 7 illustrates a projection of the fixed coordinates (Xₒ, Yₒ, Zₒ) of the robot over the Xₒ-Yₒ plane; and Fig. 8 illustrates a projection of the robot over the Mₒ-Zₒ plane.
- STEP 1:: First, the position data Pₓ, P_{y} and P_{z} of the robot are given.
- STEP 2:: Under the condition that the wrists 15, 16 and 17 are not movable, the calculations of the link angles θ₁, θ₂ and θ₃ of the fundamental three axes (body 12, lower arm 13 and upper arm 14) are calculated.

The operation is carried out by the following steps. As shown in Fig. 7, the robot is projected on the plane Xₒ-Yₒ of the fixed coordinate system, thereby obtaining Pₓ, Pₓ', P_{y} and Py'. Then the link angle θ₁ is given by${\text{θ}}_{\text{1}} {\text{= tan}}^{\text{-1}} {\text{(P}}_{\text{y}} {\text{'/P}}_{\text{x}} \text{')}$

Next, it is assumed that the vector to the control point is Mₒ and the plane Mₒ-Zₒ be defined. As shown in Fig. 8, the robot is projected over the plane Mₒ-Zₒ, whereby Pz', P_{z}", M', M".

Then, the link angles θ₂ and θ₃ are obtained from the following equations.${\text{θ}}_{\text{2}} {\text{= tan}}^{\text{-1}} \text{(P'/M")}$${\text{θ}}_{\text{3}} {\text{= tan}}^{\text{-1}} {\text{(P}}_{\text{z}} \text{'/M")}$

Thus, the link angles θ₁, θ₂ and θ₃ are obtained, but it is noted here that these angles result under the assumption that the wrists remain stationary. In other words, these are temporary or provisional results.
- STEP 3:: Next the orientation data nₓ, n_{y}, n_{z}, Oₓ, O_{y}, O_{z}, aₓ, a_{y}, and a_{z} are inputted and calculated with the previously obtained θ₁, θ₂ and θ₃ (temporary or provisional results), whereby the link angles θ₁, θ₂ and θ₃ of a link flange are obtained. In this case, the arithmetic operations used in the conventional orientation control method are used to obtain the data for the wrist flange. The position data are not taken into consideration in this case. When, from the first to the sixth link coordinates, a matrix Aₙ representing the orientation of the six-axis articulation as the product of the four simultaneous conversions by which the n-th link coordinates are associated with the (n-1)-th link coordinates is introduced, the coordinates T₆ of the wrist flange are represented by${\text{T}}_{\text{6}} {\text{= A}}_{\text{1}} {\text{A}}_{\text{2}} {\text{A}}_{\text{3}} {\text{A}}_{\text{4}} {\text{A}}_{\text{5}} {\text{A}}_{\text{6}}$
Rewriting the above formula, A₃⁻¹ A₂⁻¹ A₁⁻¹ T₆ = A₄ A₅ A₆ 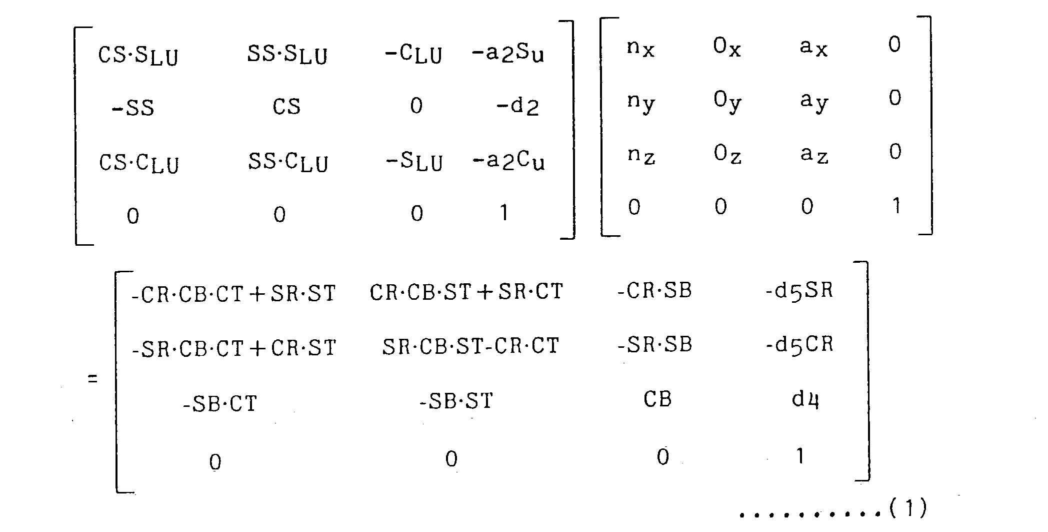
is obtained.

where, S, L, U, R, B and T represent Z₁, Z₂ ...., and Z₆-axes, respectively.${\text{SS = sinθ}}_{\text{1}} {\text{, S}}_{\text{LU}} {\text{= sin(θ}}_{\text{2}} {\text{+θ}}_{\text{3}} {\text{), S}}_{\text{U}} {\text{= sinθ}}_{\text{3}}$${\text{CS = cosθ}}_{\text{1}} {\text{, C}}_{\text{LU}} {\text{= cos(θ}}_{\text{2}} {\text{+θ}}_{\text{3}} {\text{), C}}_{\text{U}} {\text{= cosθ}}_{\text{3}}$${\text{SR = sinθ}}_{\text{4}} {\text{, SB= sinθ}}_{\text{5}} {\text{, ST = sinθ}}_{\text{6}}$${\text{CR = cosθ}}_{\text{4}} {\text{, CB = cosθ}}_{\text{5}} {\text{, CT = cosθ}}_{\text{6}}$ and
- a₂=: length of the arm of the L axis;
- d₂ =: the distance between the center of rotation of the S axis and the center of rotation of the R axis;
- d₄ =: the length of the arm of the U axis; and
- d₅ =: the distance between the center of rotation of the R axis and the center of rotation of the T axis.

Rewriting Eq. (1), we have${\text{-CR · SB = a}}_{\text{x}} {\text{CS · S}}_{\text{LU}} {\text{+a}}_{\text{y}} {\text{SS · S}}_{\text{LU}} {\text{-a}}_{\text{z}} {\text{C}}_{\text{LU}}$${\text{-SR · SB = a}}_{\text{x}} {\text{SS+a}}_{\text{y}} \text{CS}$

Further modifying Eqs. (2) and (3), we have 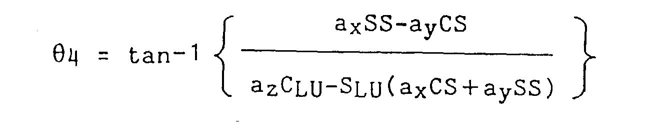 And A₄-1 A₃-1 A₂-1 - T₆ = A₅ A₆

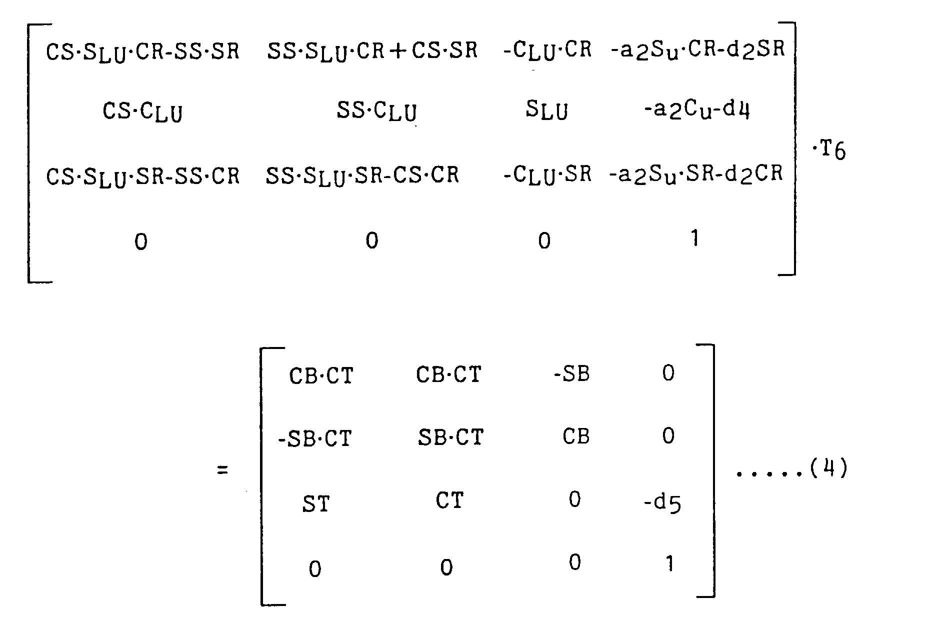

From Eq. (4), we have${\text{-SB=a}}_{\text{x}} {\text{(CS·S}}_{\text{LU}} {\text{·CR-SS-SR)+a}}_{\text{y}} {\text{(SS·S}}_{\text{LU}} {\text{·CR+CS·SR)-a}}_{\text{z}} {\text{C}}_{\text{LU}} \text{·CR}$${\text{CB=a}}_{\text{x}} {\text{CS·C}}_{\text{LU}} {\text{+a}}_{\text{y}} {\text{SS·C}}_{\text{LU}} {\text{+S}}_{\text{LU}} {\text{a}}_{\text{z}}$

From Eqs. (5) and (6), we have

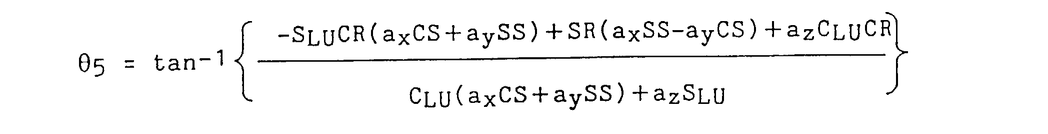

From Eq. (4), we have${\text{ST=n}}_{\text{x}} {\text{(CS·S}}_{\text{LU}} {\text{·SR-SS·CR) +n}}_{\text{y}} {\text{(SS·S}}_{\text{LU}} {\text{·SR-CS·CR)-n}}_{\text{z}} {\text{C}}_{\text{LU}} \text{·SR}$${\text{CT=O}}_{\text{x}} {\text{(CS·S}}_{\text{LU}} {\text{·SR-SS·CR) +Oy(SS·S}}_{\text{LU}} {\text{·SR-CS·CR)-O}}_{\text{z}} {\text{C}}_{\text{LU}} \text{·SR}$

Assuming${\text{K=CS·S}}_{\text{LU}} \text{·SR-SS·CR,}$${\text{L=SS·S}}_{\text{LU}} \text{·SR-CS·CR,}$${\text{M=C}}_{\text{LU}} \text{·SR}$ then we have${\text{θ}}_{\text{6}} {\text{= tan}}^{\text{-1}} \text{(} \frac{{\text{n}}_{\text{x}} {\text{K+n}}_{\text{y}} {\text{L-n}}_{\text{z}} \text{M}}{{\text{O}}_{\text{x}} {\text{K+O}}_{\text{y}} {\text{L-O}}_{\text{z}} \text{M}} \text{)}$
- STEP 6:: Furthermore, based on the link angles θ₄, θ₅ and θ₆ and the position data Pₓ, P_{y}, P_{z}, the position is corrected. Similar arithmetic operations are carried out so that the link angle θ₁ ..... θ₆ of the three fundamental axes are obtained in the manner described above.
- STEP 7:: After completion of the arithmetic operations, the link angles θ₁ ..... θ₆ are outputted. These link angles approximately satisfy the position data and the orientation data specified by T6.

Furthermore, in response to a degree of accuracy defined by the mechanical factors of the robot and a degree of accuracy in the case of the robot operation, the above-described arithmetic operations (STEPS 1-6) may be repeated until a desired degree of accuracy is obtained.

In response to the link angles thus obtained, the operation command is delivered to the axis so that the orientation of the workpiece 4 clamped by the robot can be handled as shown in Fig. 2. The same is true for the rotations about Xᵤ and Yᵤ axes.

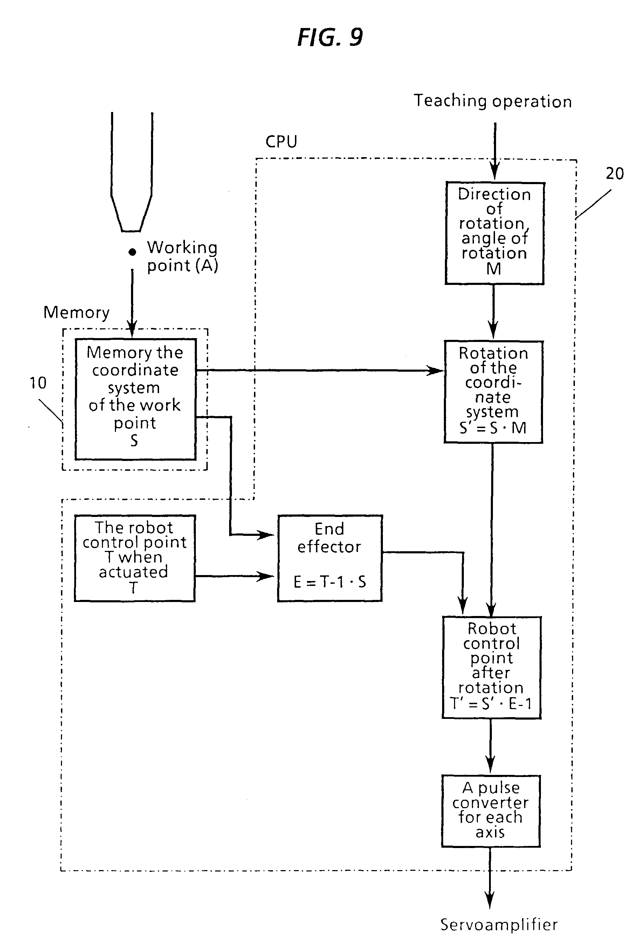

Fig. 9 is a block diagram illustrating the construction of a robot controller adapted to carry out the above described control method.

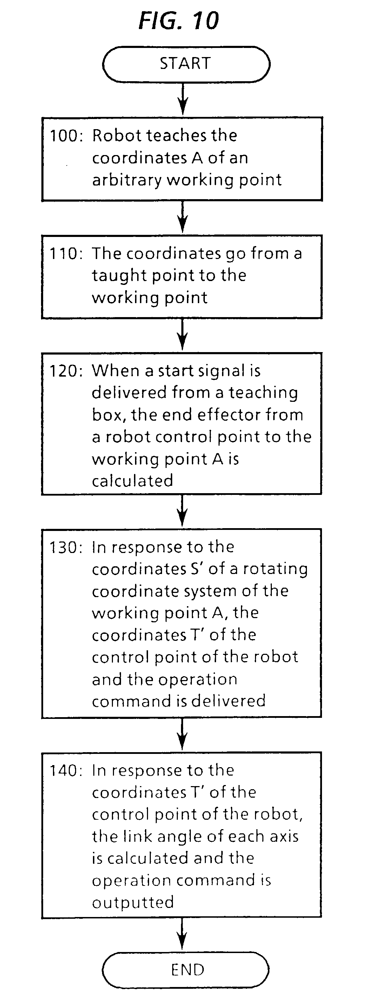

As shown in Fig. 9, the robot controller consists of a memory 10 and a CPU 20. The operation of the robot controller will be described with reference to the flowchart illustrated in Fig. 10. First, at step 100, the robot teaches the coordinates of an arbitrary working point A. Next as shown in step 110, the coordinates S of the working point are calculated based on the teaching points and then stored in the memory areas of the memory 10. Third, at step 120, in response to the signal from a teach box, an operation command is delivered to the CPU 20 so that the end effector E from the control point R of the robot to the working point A is calculated. At step 130, in response to the rotating coordinate system S' of the working point A and the former end effector E, the coordinates T' of the control point of the robot are calculated. At the step 140, in response to the coordinates T' of the control point of the robot, the link angle of each axis is calculated and the operation command is outputted.

In the case of the holding or clamping operation on a work, which is one of the operation modes of the industrial robot, the teaching operation is remarkably enhanced according to the present invention.

## Claims

1. A robot motion control method, wherein a location of a tool (2) is fixed at a certain position and a workpiece (4) is clamped by a robot (1), the robot motion control method comprising the following steps:
- defining (STEP 1), through the reference coordinate system (Px, Py, Pz) of the robot (1), an arbitrary working point (A) corresponding to a top of the tool (2);
- temporarily determining (STEP 2) first link angles (Θ₁, Θ₂, Θ₃) of fundamental axes (12, 13, 14) of the robot (1) under the assumption that wrists (15, 16, 17) of the robot (1) remain stationary;
- obtaining (STEP 3-5) second link angles (Θ₄, Θ₅, Θ₆) of the fundamental axes (12, 13, 14) basing on orientation data (nₓ, n_{y}, n_{z}, Oₓ, O_{y}, O_{z}, aₓ, a_{y}, a_{z}) of a teaching operation of the workpiece (4) held or clamped by said robot (1) with respect to said working point (A);
- correcting (STEP 6) the position of the arbitrary working point (A) based on the second link angles (Θ₄, Θ₅, Θ₆) and position data (Px, Py, Pz) of the robot (1) in the reference coordinate system;
- controlling said working point (A) basing on the first and second link angles (Θ₁, Θ₂, Θ₃, Θ₄, Θ₅, Θ₆), whereby the orientation of said robot (1) can be changed to a desired relative orientation with respect to said working point (A).

2. A robot control method according to claim 1, wherein the first and second link angles (Θ₁, Θ₂, Θ₃, Θ₄, Θ₅, Θ₆) are outputted (STEP 7) before the controlling of the working point (A).

3. A robot control method according to claim 1 or 2, wherein the arithmetic operations (STEP 1 to STEP 6) are repeated to obtain a desired degree of accuracy for the robot operation.

## Patentansprüche

1. Robotersteuerungsverfahren, wobei eine Stelle eines Werkzeugs (2) an einer bestimmten Position festgelegt wird und ein Werkstück (4) von einem Roboter (1) ergriffen wird, wobei das Robotersteuerungsverfahren die folgenden Schritte umfaßt:
- Definieren (SCHRITT 1) eines willkürlichen Arbeitspunkts (A) entsprechend einer Spitze des Werkzeugs (2) durch das Bezugskoordinatensystem (Pₓ, P_{y}, P_{z}) des Roboters (1);
- vorübergehendes Bestimmen (SCHRITT 2) erster Verknüpfungswinkel (θ₁, θ₂, θ₃) von fundamentalen Achsen (12, 13, 14) des Roboters (1) unter der Annahme, daß Greifer (15, 16, 17) des Roboters (1) stationär verbleiben;
- Erhalten (SCHRITT 3-5) von zweiten Verknüpfungswinkeln (θ₄, θ₅, θ₆) der fundamentalen Achsen (12, 13, 14), basierend auf Orientierungsdaten (nₓ, n_{y}, n_{z}, Oₓ, O_{y}, O_{z}, aₓ, a_{y}, a_{z}) eines Lehrvorgangs des von dem Roboter (1) gehaltenen oder ergriffenen Werkstücks (4) relativ zu dem Arbeitspunkt (A);
- Korrigieren (SCHRITT 6) der Position des willkürlichen Arbeitspunkts (A), basierend auf zweiten Verknüpfungswinkeln (θ₄, θ₅, θ₆) und Positionsdaten (Pₓ, P_{y}, P_{z}) des Roboters (1) in dem Bezugskoordinatensystem;
- Steuern des Arbeitspunkts (A) basierend auf den ersten und zweiten Verknüpfungswinkeln (θ₁, θ₂, θ₃, θ₄, θ₅, θ₆), wodurch die Orientierung des Roboters (1) auf eine gewünschte relative Orientierung relativ zu dem Arbeitspunkt (A) geändert werden kann.

2. Robotersteuerungsverfahren nach Anspruch 1, worin die ersten und zweiten Verknüpfungswinkel (θ₁, θ₂, θ₃, θ₄, θ₅, θ₆) vor der Steuerung des Arbeitspunkts ausgegeben werden (SCHRITT 7).

3. Robotersteuerungsverfahren nach Anspruch 1 oder 2, worin die arithmetischen Vorgänge (SCHRITT 1 bis SCHRITT 6) wiederholt werden, um einen gewünschten Grad an Genauigkeit für die Roboterbetätigung zu erhalten.

## Revendications

1. Procédé de commande de mouvement de robot, dans lequel un emplacement d'un outil (2) est fixé en une certaine position, et une pièce de travail (4) est serrée par un robot (1), le procédé de commande de robot comprenant les étapes suivantes :
- la définition (ETAPE 1), dans le système de coordonnées de référence (Px, Py, Pz) du robot (1), d'un point de travail arbitraire (A) correspondant à un sommet de l'outil (2) ;
- la détermination temporaire (ETAPE 2) de premiers angles de liaison (θ₁, θ₂, θ₃) d'axes fondamentaux (12, 13, 14) du robot (1) en supposant que des poignets (15, 16, 17) du robot (1) restent stationnaires.
- l'obtention (ETAPES 3 à 5) de deuxièmes angles de liaison (θ₄, θ₅, θ₆) des axes fondamentaux (12, 13, 14) en fonction de données d'orientation (nₓ, n_{y}, n_{z}, Oₓ, O_{y}, O_{Z}, aₓ, a_{y}, a_{z}) d'une opération d'apprentissage de la pièce de travail (4) maintenue ou serrée par ledit robot (1) par rapport audit point de travail (A) ;
- la correction (ETAPE 6) de la position du point de travail arbitraire (A) en fonction des deuxièmes angles de liaison (θ₄, θ₅, θ₆) et de données de position (Px, Py, Pz) du robot (1) dans le système de coordonnées de référence ;
- le contrôle dudit point de travail (A) en fonction des premiers et deuxièmes angles de liaison (θ₁, θ₂, θ₃, θ₄, θ₅, θ₆), grâce à quoi l'orientation dudit robot (1) peut être changée en une orientation relative désirée par rapport audit point de travail (A).

2. Procédé de commande de robot selon la revendication 1, dans lequel les premiers et deuxièmes angles de liaison (θ₁, θ₂, θ₃, θ₄, θ₅, θ₆) sont délivrés en sortie (ETAPE 7) avant le contrôle du point de travail (A).

3. Procédé de commande de robot selon la revendication 1 ou 2, dans lequel les opérations arithmétiques (ETAPE 1 à ETAPE 6) sont répétées pour obtenir un degré désiré de précision pour le fonctionnement du robot.
